# EUROPÄISCHE PATENTANMELDUNG

(11) **EP 0 891 854 A2**
(43) Veröffentlichungstag der Anmeldung: **20.01.1999**
(21) Anmeldenummer: 98113330.9
(22) Anmeldetag: 17.07.1998
(51) Int. Cl.: B29C 47/16

(54) **Vorrichtung zum Dosieren eines plastifizierten Kunststoffs, insbesondere Kunststoffsstrangs**

(30) Priorität: 18.07.1997 DE 19731023
(71) Anmelder: Kannegiesser KMH Kunststofftechnik GmbH, 32602 Vlotho (DE)
(72) Erfinder: Becker, Henning, 32425 Minden (DE)
(74) Vertreter: Möller, Friedrich, Dipl.-Ing.

(57) **Zusammenfassung**

Zur Herstellung von Formkörpern aus plastifiziertem Kunststoff wird letzterer durch einen Düsenkanal (11) gepreßt und in einer Form abgelegt. Der Querschnitt des Düsenkanals (11) kann beispielsweise durch einen die Höhe desselben ändernden Staubalken (15) verringert werden. Eine Breitenverstellung ist nicht möglich. Entsprechend kann kein genauer Strangquerschnitt eingestellt werden.

Die erfindungsgemäße Vorrichtung beinhaltet zusätzliche Mittel zur Verringerung des Strangquerschnitts. Insbesondere sind zusätzliche Staubalken in Form gegeneinander bewegbarer Schieber (21, 22) vorgesehen. Mit diesen ist eine Verringerung des Strangquerschnitts in der Breite möglich. Insgesamt läßt sich so ein fast beliebiger Querschnitt einstellen.

## Beschreibung

Die Erfindung betrifft eine Vorrichtung zum Dosieren eines plastifizierten Kunststoffs, insbesondere Kunststoffstrangs, mit einem Kanal, der eine Öffnung zum Austritt des Kunststoffs aufweist, und mit einem Staubalken zum Schließen des Kanals und/oder Verändern des Querschnitts des Kanals.

Die Erfindung bezieht sich auf die Formgebung von Kunststoffen, insbesondere von Thermoplasten oder Elastomeren, die gegebenenfalls durch im Kunststoff eingebettete Fasern, beispielsweise Glasfasern, verstärkt sein können. Die Kunststoffe werden in einer Plastifiziereinrichtung erwärmt und durchmischt. Im plastischen Zustand tritt der Kunststoff aus einem entsprechenden Kanal der Plastifiziereinrichtung aus und wird in eine Form eingelegt. Eine Öffnung des Kanals ist mit einem sogenannten Staubalken im Querschnitt veränderbar. Aus der DE-A-195 40 815 ist es bekannt, den Kanalquerschnitt durch eine Bewegung des Staubalkens zu verändern. Eine Dimensionierung des Kanalquerschnitts durch Vorgabe einer bestimmten Dicke bzw. Höhe und Breite ist mit der bekannten Vorrichtung nicht möglich.

Aufgabe der vorliegenden Erfindung ist es, eine Vorrichtung zu schaffen, mit der der Kanalquerschnitt besser einstellbar ist, als bei der bekannten Vorrichtung.

Erfindungsgemäß wird die Aufgabe durch die Vorrichtung gemäß Anspruch 1 gelöst. Das demnach vorgesehene weitere Mittel zum Verändern des Kanalquerschnitts ermöglicht eine insgesamt flexiblere Einstellung des Kanalquerschnitts. So können bei geeigneter Anordnung Dicke (Höhe) und Breite des Querschnitts exakt abgestimmt und auf diese Weise der austretende Kunststoffstrang an die Nestkontur der zu füllenden Form angepaßt werden.

Vorteilhafterweise sind zwei zusätzliche Staubalken bzw. Schieber vorgesehen, die quer zu dem Staubalken bewegbar sind und vorzugsweise in einer gegenüber der Bewegungsebene des ersten Staubalkens versetzten Ebene angeordnet sind. Auf diese Weise können Dicke (Höhe) und Breite des Kanalquerschnitts einfach eingestellt, also der Kanalquerschnitt in verschiedenen Richtungen bzw. von unterschiedlichen Seiten verändert werden.

Besonders vorteilhaft ist eine Ausführung mit zwei zusätzlichen und synchron zueinander bewegbaren Staubalken. So ist sichergestellt, daß durch eine Breiteneinstellung des Kunststoffstranges nicht auch die Lage seiner Längsmittelachse verstellt wird. Natürlich können die zusätzlichen Mittel bzw. zusätzlichen Staubalken auch zur Veränderung einer anderen Querschnittsrichtung als der Breite vorgesehen sein, etwa zur Einstellung der Höhe. Entsprechend dient dann der erste Staubalken zur Veränderung einer anderen Abmessung, in diesem Fall der Querschnittsbreite.

Die zusätzlichen Staubalken bzw. weiteren Mittel zum Verringern des Kanalquerschnitts werden durch mindestens einen eigenen Hydraulikzylinder bewegt. Die Hydraulikzylinder für jeden Staubalken oder jedes zusätzliche Mittel sind vorzugsweise zur Sicherstellung einer synchronen Betätigung miteinander gekoppelt. Möglich ist dies etwa durch eine Verbindungsleitung der Hydraulikzylinder, so daß bei einer Kolbenbewegung des einen Zylinders eine entsprechende Menge Hydraulikflüssigkeit in den anderen Zylinder gepumpt und dort im wesentlichen verzögerungsfrei eine synchrone Kolbenbewegung auslöst. Dazu sind die in den Hydraulikzylindern jeweils beteiligten Druckräume bzw. Querschnitte gleich groß. Insbesondere weisen die Hydraulikzylinder gleiche Abmessungen auf. Zur Betätigung beider zusätzlicher Staubalken bzw. Mittel wird nur einer der Hydraulikzylinder durch einen geeigneten Antrieb beaufschlagt, während der andere Hydraulikzylinder automatisch durch die beschriebene Kopplung eine analoge Bewegung - jedoch in entgegengesetzter Richtung - ausführt.

Bei einer bevorzugten Ausbildung der Vorrichtung ist vorgesehen, die Hydraulikzylinder parallel zur Bewegungsbahn der zusätzlichen Staubalken bzw. Schieber neben denselben anzuordnen. Dadurch ist es möglich, die Hydraulikzylinder hinter dem Gehäuse der Vorrichtung unterzubringen, wodurch die Vorrichtung sehr kompakte Abmessungen erhält.

Gemäß einer bevorzugten Weiterbildung der Vorrichtung sind den zusätzlichen Staubalken bzw. Schiebern neben den Führungen derselben am bzw. im Gehäuse weitere Führungen, insbesondere außerhalb des Gehäuses, zugeordnet. Vorzugsweise befinden sich. diese zusätzlichen Führungen auf der von den zusätzlichen Staubalken bzw. Schiebern weggerichteten Seite der Hydraulikzylinder. Die Hydraulikzylinder greifen somit zwischen den Führungen der zusätzlichen Staubalken bzw. Schieber im Gehäuse einerseits und außerhalb des Gehäuses andererseits an, wodurch eine reibungsarme, verkantungsfreie Bewegung der zusätzlichen Staubalken bzw. Schieber von den Hydraulikzylindern möglich ist.

Weitere Merkmale der Erfindung ergeben sich aus den Ansprüchen.

Vorteilhafte Ausführungsbeispiele der erfindungsgemäßen Vorrichtung werden nachfolgend anhand der Zeichnung erläutert. In dieser zeigen:
- Fig. 1: eine schematische Ansicht einer Öffnung eines Kanals zum Austritt eines plastifizierten Kunststoffstranges,
- Fig. 2: eine Darstellung entsprechend Fig. 1, jedoch mit veränderten Stellungen von Staubalken bzw. Schiebern,
- Fig. 3: eine perspektivische Darstellung eines Teils der in den Fig. 1 und 2 gezeigten Vorrichtung,
- Fig. 4: einen vergrößerten Querschnitt durch die Darstellung gemäß Fig. 3,
- Fig. 5: eine schematische Darstellung von Hydraulikzylindern zur Betätigung zusätzlicher Staubalken bzw. Schiebern,
- Fig. 6: eine Ansicht der Vorrichtung von der Seite,
- Fig. 7: eine Ansicht der Vorrichtung von der Rückseite, und
- Fig. 8: eine Ansicht der Vorrichtung von oben.

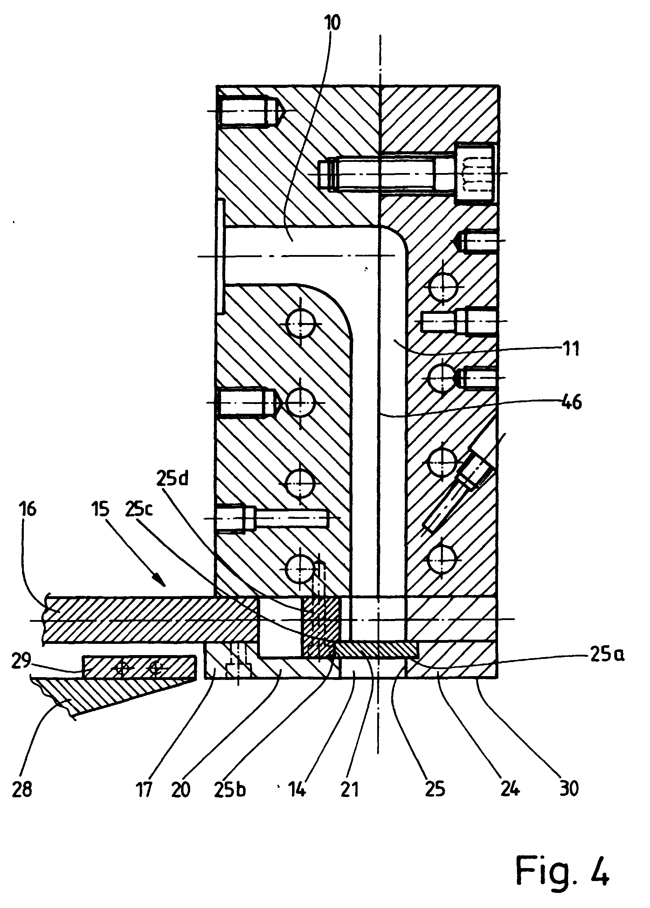

Die nachfolgend beschriebene Vorrichtung ist einer nicht gezeigten Plastifiziereinrichtung nachgeordnet. In dieser wird ein Kunststoffstrang 10 plastifiziert und durch ebenfalls nicht gezeigte Druckmittel, etwa eine Plastifizierschnecke, in einen Düsenkanal 11 eingepreßt. Die Eintrittsrichtung des Kunststoffstrangs in dem Düsenkanal 11 ist mit dem Pfeil 12 bezeichnet, siehe Fig. 4.

Im Düsenkanal 11 erfolgt im gezeigten Ausführungsbeispiel der Erfindung eine Umlenkung des Strangs 10 aus der horizontalen in eine vertikal abwärts gehende Richtung. Das entsprechend ausgebildete und den Kanal 11 aufnehmende Gehäuse 13 weist an seiner Unterseite eine Austrittsöffnung 14 auf. Eine nachgeordnete und den plastifizierten Kunststoffstrang 10 aufnehmende Form ist wiederum nicht gezeigt.

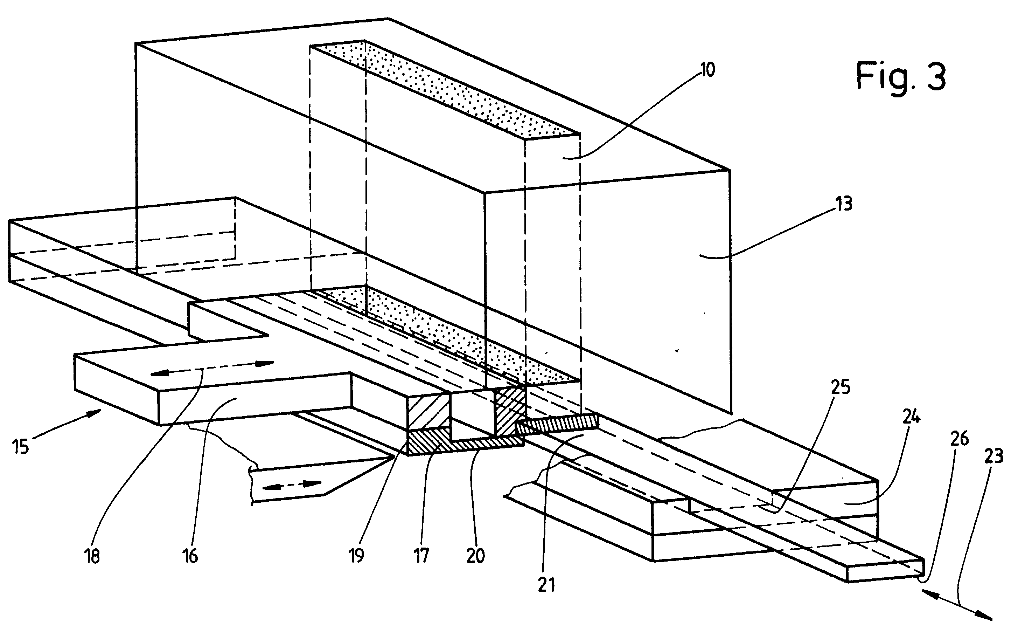

Im Bereich der Öffnung 14 sind verschiedene Organe zum Verschließen und zum Verringern des Querschnitts derselben vorgesehen. Ein Staubalken 15, bestehend aus einem Träger 16 zur Betätigung und einer Stauplatte 17, dient der Begrenzung und Verringerung des wirksamen Querschnitts der Öffnung 14 in einer Richtung, nämlich in Bewegungsrichtung des Trägers 16. Die genannte Bewegungsrichtung ist in Fig. 3 durch den Pfeil 18 angedeutet und verläuft parallel zur Öffnungsebene der Austrittsöffnung 14 bzw. quer zur Längserstreckungsrichtung des Düsenkanals 11.

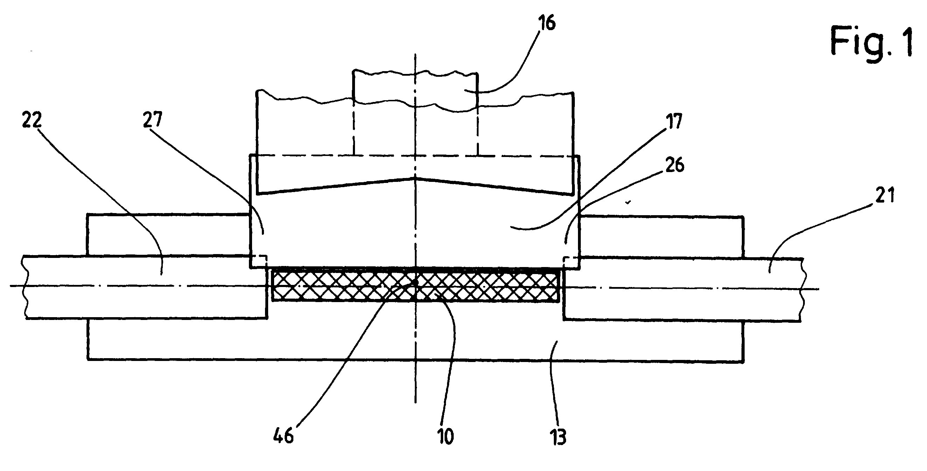

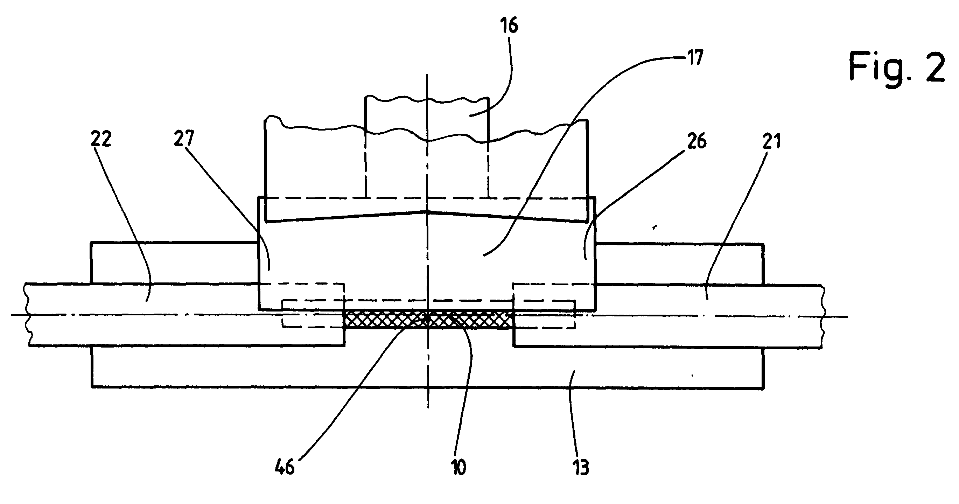

Mittel zur Betätigung des Staubalkens 15 sind grundsätzlich bekannt und müssen an dieser Stelle nicht näher erläutert werden. Die Stauplatte 17 weist einen L-förmigen Querschnitt auf, wobei ein kurzer aufrechter Schenkel 19 mit dem Träger 16 verbunden ist und ein längerer, liegender Schenkel 20 in den Bereich der Austrittsöffnung 14 bewegbar ist, siehe insbesondere Fig. 3. Durch entsprechende Einstellung des Staubalkens 15 ist der wirksame Querschnitt der Öffnung 14 bzw. der Querschnitt des Kunststoffstranges 10 in diesem Bereich in einer Richtung einstellbar, beispielsweise in der Höhe des gegebenenfalls nach dem Austritt aus der Öffnung 14 waagerecht. zu liegen kommenden Kunststoffstranges 10. Eine Begrenzung des Querschnitts auch in der Breite ist möglich durch zusätzliche Staubalken, nämlich Schieber 21, 22. In Fig. 3 ist nur einer der Schieber eingezeichnet, während in den Fig. 1 und 2 beide Schieber 21, 22 erkennbar sind. Diese sind in einer gemeinsamen und gegenüber der Stauplatte 17 versetzten Ebene angeordnet und quer zur Bewegungsrichtung (Pfeil 18) des Staubalkens 15 bewegbar, nämlich in Richtung des Pfeils 23, siehe Fig. 3. Die Schieber 21, 22 sind quaderförmig, das heißt mit rechteckigem Querschnittsprofil gestaltet und können durch geeignete Betätigungsorgane aufeinander zu bewegt und voneinander weg bewegt werden, vergleiche Fig. 1 und 2. Durch das entgegengesetzte Aufeinanderzubewegen der Schieber 21, 22 wird eine Querschnittsverringerung der wirksamen Öffnung 14 bzw. des Kunststoffstranges 10 bewirkt und zwar in Richtung quer zur Querschnittsänderung durch den Staubalken 15. Bei einer Höhenverringerung des Kunststoffstranges 10 durch Verstellen des Staubalkens 15 ergibt sich durch Verstellung der Schieber 21, 22 eine Breitenänderung des Kunststoffstrangs 10. Im Ergebnis ist der Kunststoffstrang 10 in beiden Querschnittsdimensionen einstellbar bzw. veränderbar.

Die Schieber 21, 22 sind im Gehäuse 13 in einer entsprechenden Nut bzw. Führung 24 gehalten. Diese weist zumindest im Bereich der Öffnung 14 einen Vorsprung 25 auf, an dem die Schieber 21, 22 unter dem Druck des Kunststoffstranges 10 mit einem dem Träger 16 abgewandten Randbereich 25a anliegen. An einem dem Träger 16 zugewandten Randbereich 25b sind die Schieber 21, 22 gehalten (geführt) zwischen dem Schenkel 20 und einem Winkel 25c eines parallel zum Schieber mit dem Gehäuse 13 fest verbundenen Trägers 25d. Dieser dient zugleich als Anschlag für die Schließbewegung des Staubalkens 15. Außerhalb des Bereichs der Austrittsöffnung 14 können die Schieber 21, 22 über ihre volle Breite bzw. am Umfang ihres gesamten Querschnitts abgestützt und geführt sein in entsprechenden Gehäuseteilen. Die Schieber 21, 22 sind relativ zur Stauplatte 17 innenseitig angeordnet, das heißt, in Fließrichtung des Kunststoffstranges 10 wird der Kanalquerschnitt zunächst durch die Schieber 21, 22 begrenzt und dann durch die Stauplatte 17. Letztere ist so angeordnet und geführt, daß sie mit Randbereichen 26, 27 zumindest bei teilweise betätigten Schiebern 21, 22 an diesen zur Anlage kommt.

Nach dem Einlegen des Kunststoffstrangs 10 in die nicht gezeigte Form wird ersterer sauber abgetrennt und zwar durch ein Messer 28, das in einer Ebene parallel zur Ebene der Öffnung 14 und parallel zur Bewegungsrichtung 18 des Staubalkens 15 bewegbar ist. Hierzu gleitet das Messer 28 an einer festen Führung 29, die gleichzeitig zur Kühlung des Messers 28 dient, an der Stauplatte 17 und an einer Stirnfläche 30 des Gehäuses 13 im Bereich der Austrittsöffnung 14 entlang.

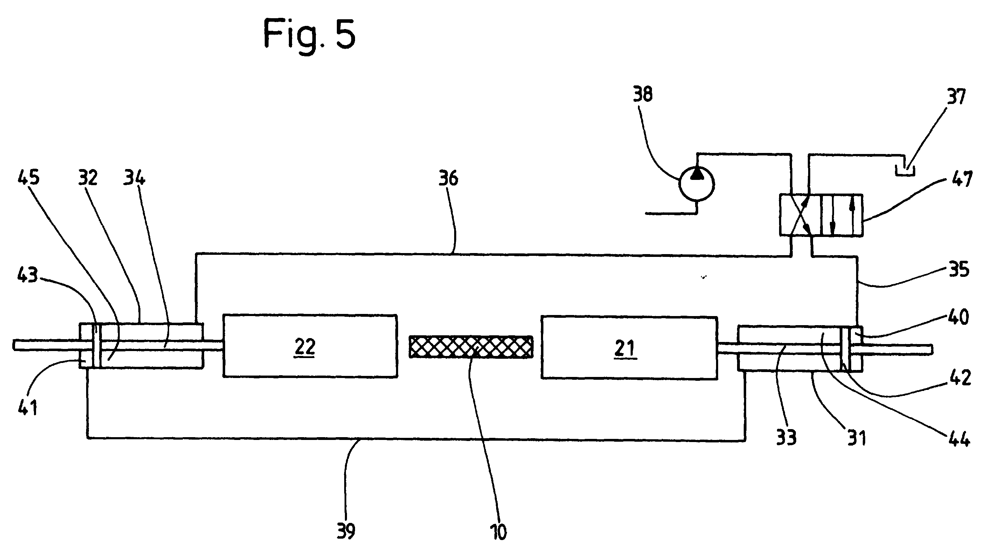

In Fig. 5 ist die Betätigung der Schieber 21, 22 schematisch dargestellt. Die Schieber 21, 22 sind synchron zueinander in entgegengesetzten Richtungen betätigbar; sie fahren also entweder synchron zusammen oder synchron auseinander. Hierzu ist jedem Schieber ein Hydraulikzylinder 31 bzw. 32 zugeordnet mit einer entsprechenden Verbindung über eine Kolbenstange 33 bzw. 34. Die Hydraulikversorgung der Zylinder 31, 32 beaufschlagt wechselweise einen der Zylinder und entlädt den jeweils anderen. Hierzu sind Hydraulikleitungen 35, 36 über ein 4/2-Wegeventil 47 an einen Tank 37 einerseits und eine Pumpe 38 andererseits angeschlossen.

Die Hydraulikzylinder 31, 32 sind als doppeltwirkende Zylinder mit zweiseitiger Kolbenstange 33, 34 über eine Leitung 39 miteinander verbunden. Genaugenommen ist ein Druckraum 40 des Zylinders 31 an die zuführende Leitung 35 angeschlossen, während ein Druckraum 41 des anderen Zylinders 32 über die verbindende Leitung 39 versorgt wird. Die Druckräume 40, 41 weisen gleiche Querschnitte auf. Dazu verfügen die Hydraulikzylinder 31, 32 über durchgehende Kolbenstangen 33, 34. Entsprechend bewirken gleiche zugeführte Mengen an Hydraulikflüssigkeit gleiche Verstellwege der Schieber 21, 22. Auf diese weise ist eine synchrone Betätigung der beiden Schieber durch Ansteuerung bzw. Beaufschlagung des ersten Hydraulikzylinders 31 gewährleistet.

Den Druckräumen 40, 41 gegenüberliegend, das heißt auf der anderen Seite der Kolben 42, 43, liegen dieselben Querschnitte aufweisende zweite Druckräume 44, 45. Der zweite Druckraum 44 des in Fig. 5 rechten Hydraulikzylinders 31 ist über die Leitung 39 mit dem (ersten) Druckraum 41 des linken Hydraulikzylinders 36 verbunden. Bei Beaufschlagung des Kolbens 42 über die Leitung 35 erfolgt somit eine Entleerung des zweiten Druckraumes 44 über die Leitung 39 in den Druckraum 41. Dadurch wird der Kolben 42 verzögerungsfrei synchron zum Kolben 42 bewegt. In entsprechender Weise gleiten hierdurch die Schieber 21, 22 zur Verringerung des Kanalquerschnitts synchron aufeinander zu. Ein Auseinanderbewegen der Schieber 21, 22 erfolgt in umgekehrter Weise und nach Verstellung des 4/2-Wegeventils 47 in die in Fig. 5 nicht gezeigte Position. Dann wird nämlich der zweite Druckraum 45 des linken Hydraulikzylinders 32 über die Leitung 36 mit Druck beaufschlagt. Der Druck wird weitergegeben über den Kolben 43, den (ersten) Druckraum 41 und die Leitung 39 in den zweiten Druckraum 44 bis auf den Kolben 42. Die Schieber 21, 22 werden dadurch synchron auseinander bewegt. Die Entleerung des Druckraumes 40 erfolgt über die Hydraulikleitung 35 in den Tank 37.

Die Schieber 21, 22 sind so angeordnet und werden so bewegt, daß der Querschnitt des Kanals 11 beidseitig im gleichen Maße verringert wird. Das heißt, auch durch Betätigung der Schieber 21, 22 ändert sich nicht die Lage der Längsmittelachse 46 des Kunststoffstrangs 10 in Richtung der Schieber 21, 22, siehe Fig. 1, 2. Für den Fall, daß es infolge von Leckverlusten an den Kolben 42, 43 in den Hydraulikzylindern 35 und 36 dazu kommen sollte, daß die Schieber 21, 22 keine synchrone Position zueinander aufweisen, verfügt die Vorrichtung über eine Breitensynchronisation. Bei dieser werden die Hydraulikzylinder 31, 32 in eine Endposition gefahren, beispielsweise in die Endposition der Fig. 5, bei denen die Schieber 21, 22 den größten Abstand zueinander aufweisen. Im Falle einer nicht vorhandenen Synchronisation befindet sich in diesem Falle ein Kolben 42 oder 43 eines Hydraulikzylinders 35, 36 nicht in seiner Endposition. Der Kolben 42, 43 des betreffenden Hydraulikzylinders 31, 32 wird dann dadurch in seine. Endposition gebracht, daß in die Hydraulikleitungen 35 oder 36 von der Pumpe 38 Hydrauliköl hineingepumpt wird. Entsprechend muß aus der Leitung 39 Hydrauliköl entweichen können. Dies geschieht durch entsprechende Ventile und Bypaßleitungen in den Hydraulikleitungen 35, 36 und der Leitung 39. In analoger Weise kann eine Breitensynchronisation bei zusammengefahrenen Schiebern 21, 22 erfolgen. Dann wird ein Kolben 42, 43 des betreffenden Hydraulikzylinders 31, 32 in eine eingefahrene Postion gebracht und in dieser Position hydraulisch gehalten. Durch ein nicht gezeigtes Füllventil in der Leitung 39 wird in diese zusätzliche Hydraulikflüssigkeit gepumpt, damit auch der Kolben 42, 43 des zweiten Hydraulikzylinders 31 oder 32 in eine vollständig eingefahrene Position gelangt. Das betreffende Füllventil, das in den Zeichnungen nicht dargestellt ist, wird mit Hydrauliköl versorgt durch eine entsprechende Bypaßleitung über die Pumpe 38.

Die Schieber 21, 22 sind, wie beschrieben, über eine Hydraulikleitung und entsprechende Hydraulikzylinder miteinander zur synchronen Betätigung verbunden. Die Beaufschlagung des (ersten) Hydraulikzylinders, das heißt der Antrieb der Schieberverstellung, kann natürlich auch in anderer Weise erfolgen, beispielsweise durch einen Linearmotor oder dergleichen.

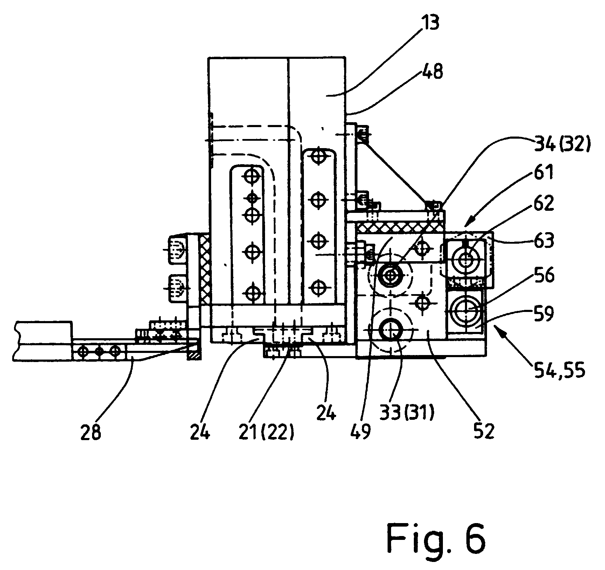

Die Fig. 6 bis 8 zeigen die Zuordnung der Hadraulikzylinder 31, 32 zum Gehäuse 13. Demnach sind die Hydraulikzylinder 31, 32 einer dem Staubalken 15 gegenüberliegenden Rückseite 48 des Gehäuses 13 zugeordnet. Die Kolbenstangen 33 und 34 der Hydraulikzylinder 31 und 32 erstrecken sich dabei parallel zu den Bewegungsachsen (Pfeil 23) der Schieber 21 und 22. Darüber hinaus liegen die Hydraulikzylinder 31, 32 mit den Kolbenstangen 33, 34 neben bzw. über den Ebenen der Schieber 21, 22 (Fig. 6). Die Hydraulikzylinder 31 und 32 sind an der Rückseite 48 des Gehäuses 13 senkrecht übereinander angeordnet, so daß ihre Kolbenstangen 33, 34 auf parallel übereinander angeordneten Längsmittelachsen kollisionsfrei aneinander vorbeibewegbar sind. Die Hydraulikzylinder 31 und 32 verfügen über ein gemeinsames Zylindergehäuse 49, das an der Rückseite 48 des Gehäuses 13 befestigt ist. Durch das Zylindergehäuse 49 sind beide Kolbenstangen 33 und 34 horizontal verlaufend hindurchgeführt.

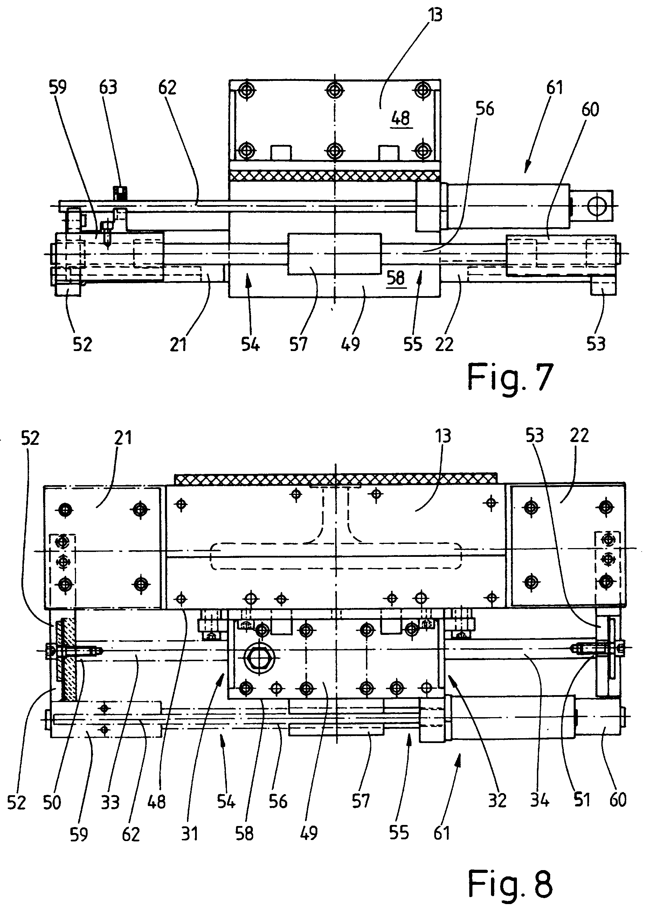

Jeweils ein Ende 50, 51 jeder Kolbenstange 33, 34 ist mit dem entsprechenden Schieber 21 und 22 verbunden. Dies erfolgt über eine quer zur Bewegungsrichtung (Pfeil 23) der Schieber 21 und 22 verlaufende Traverse 52, 53 am jeweiligen Schieber 21, 22. Die Traversen 52, 53 sind an stets außerhalb des Gehäuses 13 sich befindenden freien Endbereichen der Schieber 21, 22 befestigt (Fig. 7, 8).

Jeder Schieber 21 und 22 weist zusätzlich zur Führung 21 desselben im Gehäuse 13 eine weitere Führung 54, 55 auf. Die Führungen 54 und 55 sind auf der von der Rückseite 48 des Gehäuses 13 wegweisenden Seite der Hydraulikzylinder 31 und 32 angeordnet. Die Führungen 54 und 55 sind gebildet aus einer Führungsstange 56, die mittig mit einer Halterung 57 an einer Außenseite 58 des Zylindergehäuses 59 befestigt ist. Die Führungsstange 56 ragt jeweils mit etwa einer Hälfte ihrer Länge zur gegenüberliegenden Seiten der Halterung 57 vor und verläuft dabei horizontal gerichtet parallel zu den Kolbenstangen 33, 34 der Hydraulikzylinder 31, 32 (Fig. 6 und 8).

Auf jeden der gegenüberliegenden Endbereichen der Führungsstange 56 ist eine Führungshülse 59, 60 frei verschieblich gelagert. Damit bildet jeweils eine Führungshülse 59 und der ihr zugeordnete Endbereich der Führungsstange 56 eine der Führungen 54 bzw. 55.

Die Führungshülsen 59 und 60 der Führungen 54, 55 sind mit einem von den Schiebern 21, 22 weggerichteten Ende der jeweiligen Traverse 52, 53 fest verbunden. Durch ein Ein- und Ausfahren der Kolbenstangen 33, 34 der Hydraulikzylinder 31, 32 werden die Traversen 52, 53 mit den Schiebern 21, 25 zugleich auseinander oder zusammen bewegt. Dabei dienen die Führungen 24 und 54, 55 auf entgegengesetzten Seiten der Kolbenstangen 33, 34 der Hydraulikzylinder 31, 32 zur doppelten, verwindungsfreien Abstützung der Enden 50, 51 der Kolbenstangen 33, 34. Außerdem wird ein Verkippen der Schieber 21, 22 im Gehäuse 13 durch die doppelseitigen Führungen 24, 54 und 55 wirksam verhindert.

Oberhalb der Führungsstange 56 der Führungen 54, 55 ist eine Wegmeßeinrichtung 61 angeordnet. Die verfügt über eine länglich, horizontal gerichtete Stange 62, die bis zu einem äußeren Ende der Führungsstange 56 auf einer Seite des Gehäuses 13 verläuft und somit bei maximal ausgefahrenen Schiebern 21, 22 über der Traverse 52 des Schiebers 21 endet. Mit der Traverse 52 ist fest verbunden ein Sensor 63 (Fig. 7), der mit der Stange 61 der Wegmeßeinrichtung 61 derart korrespondiert, daß feststellbar ist, wie weit der Schieber 21 damit auch der synchron laufende Schieber 22 aus dem Gehäuse 13 herausragen. Auf diese Weise lassen sich die Schieber 21, 22 exakt gesteuert auf einen Abstand zueinander bringen, der der gewünschten Breite des Kunststoffstrangs 10 entspricht.

## Patentansprüche

1. Vorrichtung zum Dosieren eines plastifizierten Kunststoffs, insbesondere Kunststoffstrangs, mit einem Kanal (11), der eine Öffnung (14) zum Austritt des Kunststoffs aufweist, und mit mindestens einem Staubalken (15) zum Schließen des Kanals (11) und/oder Verändern des Querschnitts des Kanals (11), **gekennzeichnet durch** mindestens ein weiteres Mittel zum Verändern des Querschnitts des Kanals (11).

2. Vorrichtung nach Anspruch 1, dadurch gekennzeichnet, daß das weitere Mittel derart relativ, insbesondere unmittelbar benachbart, zum Staubalken (15) angeordnet ist, daß durch die Kombination aus Staubalken (15) und dem oder jeden weiteren Mittel ein genau definierter Querschnitt des Kanals (11) einstellbar ist.

3. Vorrichtung nach Anspruch 1 oder 2, dadurch gekennzeichnet, daß das weitere Mittel aus mindestens einem, vorzugsweise aus zwei zusätzlichen Staubalken (Schieber 21, 22) besteht, die in einer gegenüber der Bewegungsrichtung des (ersten) Staubalkens (15) abgewinkelten Richtung bewegbar sind.

4. Vorrichtung nach einem der vorhergehenden Ansprüche, dadurch gekennzeichnet, daß der zusätzliche Staubalken (oder beide) quer zur Bewegungsrichtung des ersten Staubalkens (15) bewegbar ist.

5. Vorrichtung nach einem der vorhergehenden Ansprüche, dadurch gekennzeichnet, daß der zusätzliche Staubalken (21, 22) (oder beide) in einer gegenüber der Bewegungsebene des ersten Staubalkens (15) versetzten Ebene zur Veränderung des Querschnitts des Kanals (11) bewegbar ist.

6. Vorrichtung nach einem der vorhergehenden Ansprüche, dadurch gekennzeichnet, daß die (beiden) zusätzlichen Staubalken (Schieber 21, 22) in einer gemeinsamen Ebene bewegbar sind, insbesondere zugleich und mit gleichen Geschwindigkeiten in entgegengesetzten Richtungen bewegbar sind.

7. Vorrichtung nach einem der vorhergehenden Ansprüche, dadurch gekennzeichnet, daß der erste Staubalken (15) zur Veränderung der Dicke (Höhe) des Querschnitts des Kanals (11) bewegbar ist und daß die beiden zusätzlichen Staubalken (Schieber 21, 22) zur Veränderung der Breite des Querschnitts des Kanals (11) bewegbar sind.

8. Vorrichtung nach einem der vorhergehenden Ansprüche, dadurch gekennzeichnet, daß die Mittel zum Verändern des Querschnitts des Kanals (11) bzw. die Staubalken (15, 21, 22) durch getrennte Antriebe, vorzugsweise Hydraulikzylinder (31, 32), bewegbar sind, wobei mindestens die Antriebe der zusätzlichen Staubalken (Schieber 21, 22) miteinander gekoppelt sind, derart, daß beide synchron zueinander bewegbar sind.

9. Vorrichtung nach einem der vorhergehenden Ansprüche, dadurch gekennzeichnet, daß zumindest die beiden zusätzlichen Staubalken (Schieber 21, 22) durch synchron betätigbare Hydraulikzylinder (31, 32), insbesondere Hydraulikzylinder (31, 32) mit beidseitig durchgehenden Kolbenstangen (33, 34), zu einer beidseitigen Verringerung oder Vergrößerung des Querschnitts des Kanals (11) bewegbar sind.

10. Vorrichtung nach einem der vorhergehenden Ansprüche, dadurch gekennzeichnet, daß die synchron betätigbaren Hydraulikzylinder (31, 32) über eine Leitung (39) zwischen einem zweiten Druckraum (44) des einen Hydraulikzylinders (31) und einem ersten Druckraum (41) des anderen Hydraulikzylinders (32) miteinander gekoppelt sind, wobei die miteinander über die Leitung (39) verbundenen Druckräume (44, 41) vorzugszweise gleich groß sind und/oder vorzugsweise gleiche Querschnitte aufweisen.

11. Vorrichtung nach einem der vorhergehenden Ansprüche, dadurch gekennzeichnet, daß die Hydraulikzylinder (31, 32) parallel zur Bewegungsrichtung der zustäzlichen Staubalken (Schieber 21, 22) hinter den Staubalken (Schieber 21, 22) angeordnet sind.

12. Vorrichtung nach einem der vorhergehenden Ansprüche, dadurch gekennzeichnet, daß den in einem Gehäuse (13) geführten zusätzlichen Staubalken (Schieber 21, 22) zusätzliche Führungen außerhalb des Gehäuses (13) zugeordnet sind.
